# EUROPEAN PATENT SPECIFICATION

(11) **EP 0 933 576 B1**
(45) Date of publication and mention of the grant of the patent: **17.09.2003**
(21) Application number: 99101420.0
(22) Date of filing: 27.01.1999
(51) Int. Cl.: F16L 11/08, F16L 11/04, B32B 1/08, F16L 11/12

(54) **Completely recyclable multilayered hose**
Vollständig wiederaufbereitbarer Schlauch
Tuyau multi-couche complètement recyclable

(30) Priority: 30.01.1998 IT MI980174
(43) Date of publication of application: 04.08.1999
(73) Proprietor: TPR S.p.A. Nucleo Industriale, 64020 S. Atto (Teramo) (IT)
(72) Inventor: Gennasio, Guido, 20059 Vimercate/Milano (IT)
(74) Representative: Rapisardi, Mariacristina

(56) References cited:
- EP-A- 0 649 871
- US-A- 4 559 095
- US-A- 4 702 867
- US-A- 4 758 629
- DATABASE WPI Section Ch, Week 9746 Derwent Publications Ltd., London, GB; Class A88, AN 97-493014 XP002090060 & JP 09 229241 A (TOKAI RUBBER IND LTD) , 5 September 1997

## Description

The present invention relates to a hose completely recyclable at the end of its working life.

It is known that the flexible hoses for conveying fluids of the prior art have different structures and are of different types according to the type of fluid to be carried and to the working pressure.

The prior art hoses or pipes often have a multi-layer structure having an inner zone providing the impermeability to the transported fluid, a middle reinforcing layer and an external layer for locking and protecting the middle layer.

The materials employed for the external and inner layers of the prior art hoses are organic or metallorganic polymers.

Those materials provide hoses having the requested flexibility properties but the hoses thus constructed do not have sufficient mechanical properties.

The second layer provides the requested mechanical properties to the hose because of its structure and of the material constituting the second layer which is often made by plaiting, voluting or parceling textiles, metals or thermoplastic polymers and is arranged between the external and inner layers as described above.

Particularly US4.308.895 and DE 2.419.799 disclose a hose according to the precharacterising portion of claim 1.

Those prior art hoses are notoriously problematic regarding their disposal or recycling at the end of their working life.

The above problems are partially attenuated when the reinforcing fiber is a textile rather than a metal because it is partially recyclable and reused, according to the type of polymer used for the substratum and/or covering.

The recovery of this polymer is effected by grinding the' hoses and by separating at least the larger particles of textile originally constituting the reinforcing portion of the hose from the granular polymeric material.

The thus obtained granular material, deriving from hoses having the inner and external layers made of rubber, may be reused, if suitably reground and deprived of any residual textile fiber, as a low cost filler in vulcanizable elastomeric compositions.

The particulate material obtained by hoses having the inner and external layers made of polymers or thermoplastic polymer compositions may be reused for manufacturing articles of a generally large thickness.

Thin articles cannot be manufactured because the recycled material has low mechanical properties due to the fibers trapped into the particulate and that cannot be eliminated by further grinding the material because of its thermoplasticity.

In particular, it is not possible to reuse the material for manufacturing hoses because the textile filaments would not allow the impermeability of the hose to the conveyed fluids.

A different use of the recycled material, such as injection molding, is not practically possible because the textile residues may jam the nozzles of the injectors.

The aim of the present invention is to eliminate the above cited inconveniences of the prior art by providing a hose which is completely recyclable at the end of its working life

Within this aim, an important object of the invention is to provide a hose having a high percentage of biodegradable material.

A further object of the invention is to provide a recyclable hose which also has at least the same physical and mechanical properties of the prior art hoses and which is reliable, safe and of low cost.

The above technical aim, as well as the above and other objects that will be more apparent hereinafter, are achieved by a recyclable hose according to the characterising portion of claim 1.

Further characteristics and advantages of the invention will be more apparent by the following description of an embodiment of the invention, illustrated, by way of example in the enclosed drawings wherein:
FIG. 1 is a perspective sectional view of a hose having four layers according to the invention;
FIG. 2 is a perspective sectional view of a hose having seven layers according to the invention;
FIG. 3 shows a variated embodiment of the hose according to the invention.

With particular reference to the above figures, the hose according to the invention, globally designated by the reference numeral 1, has four mutually associated concentric layers.

A first layer 2, inside the hose, is made for example by extrusion of a polyethylene with and MFI (Melt Flow Index) suitable to this type of arrangement and in any case, at 190° with 2.16 kg, comprised between 0.2 to 4 g/minute. A layer 3, overlaid on layer 2, is made of biodegradable polyolefin material or of thermoplastic rubber obtained by dynamic vulcanization of mixtures containing a crystalline polyolefin, of the PE or PP type or their mixtures and from polyolefin rubbers of the EPDM/EPM type. A third reinforcing layer 4 is made by plaiting, voluting or parceling layer 3 with a textile of PP fiber having a count between 5 and 9 g/denier and preferably between 5.5 and 8 g/denier and having a melting point from 110°C to 180°C and preferably from 120°C to 165°C. A covering layer 5, overlaid on layer 4 has the same composition of layer 3.

According to a different embodiment, the hose according to the invention is made as described above and is however provided with layers 6 between layers 2 and 3, between layers 3 and 4 and between layers 4 and 5. Layers 6 are constituted by a thermoplastic polyolefin made functional by, for example, maleic anhydride for improving the adhesion and compatibility between the layers where this layer 6 is provided.

According to a further embodiment, not shown in the drawings, the hose according to the invention has three layers, the first inner layer 2 being constituted by a thermoplastic rubber partially or completely dynamically vulcanized and based on thermoplastic polyolefins, mostly of crystalline type, preferably chosen among polyethylene and its relative copolymers and polypropylene and its relative copolymers and of polyolefin elastomers of the type EPDM/EPM or nitrile rubbers made compatible to PE or PP type mainly crystalline polyolefins and their relative copolymers.

The second reinforcing layer 4 and the third covering layer 5 constituting the hose have the same characteristics of the hose made according to the above described four layer embodiment.

The hose according to the invention was subjected to tests in order to prove its actual recyclability.

The results were then compared with the results of analogous tests carried on hose of different types not made according to the invention.

The hose subjected to the tests were: a sample 1 of the hose according to the preferred four layer embodiment of the invention, internal diameter of 13 mm and external diameter of 21 mm, constituted by 9.5% weigh/m of layer 2, 43.9% of layer 3, 3.9% of layer 4 and 42.5% of layer 5, and a sample 2 of a hose having a composition identical to that of the above describe type except that the reinforced layer was made of polyester fibers of the same count.

The samples were ground, worked in a two cylinder mixer at a temperature of 190°C +/-5°C to obtain a homogeneous mass from which a 3-4 mm sheet was obtained.

Sheets 1 and 2 were thus obtained from the hose samples 1 and 2.

A sample 3 of hose 2, reinforced by polyester, was ground to granules, then these granules were mixed to 10 parts by weigh of a compatibiliter normally used in recycling thermoplastic materials and into a cylinder mixer; the process was continued as described above to obtain sheets 3.

A sample of each sheet was stamped by compression at, 190°C +/-3°C, into a slab of 20x20x0.2 cm and its mechanical properties were then measured.

A second sample of said sheets was granulated and the granules were fed into a 30 mm diameter drawbench having a Length/Diameter ratio of 20 and to a injection press.

The resultant data were the following.

| | Sample 1 | Sample 1A | Sample 2 | Sample 3 |
|---|---|---|---|---|
| Conformation | compression | injection | compression | compression |
| Shore Hardness A (points) | 81 | 82 | 82 | 85 |
| Module at 100% Elongation (MPa) | 3.8 | 3.9 | 4.7 | - |
| Ultimate Tensile Stress (MPa) | 7.4 | 9.5 | 4.6 | 7.5 |
| Ultimate Elongation | 438 | 600 | 193 | 72 |
| Slab Appearance | good | good | streaked | streaked |
| Presence of Textile Residues | no | no | yes | yes |
| Extrudibility | excellent | excellent | bad | bad |
| Injection Moldability | excellent | excellent | bad | bad |

The results of the above described tests prove that the material constituting the hose according to the invention (samples 1 and 1A) can be completely reused and that the hose can be recycled to be used in delicate workings.

The results in fact show that the Ultimate Tensile Stress and the Ultimate Elongation of Sample 2, containing the polyester fiber textile, are respectively reduce by 38% and 56% with respect of Sample 1 because of the presence of textile residues which is the cause of discontinuity in the material and possibly of permeability if the material has to be used as substratum for hoses.

The percentage decrease of the properties of Sample 2 increases with respect of injection molded Sample 1A wherein the production method causes the orientation of the material.

In Sample 3 the effect of the compatibiliter, constituted by a high hardness polymer, is added to the effect of the polyester textile residues and the Elongation Module at 100% is not even measurable because the recycled material breaks before reaching such limit.

On the contrary, the recycled material of Sample 1 containing the polypropylene fiber textile is completely recyclable regarding its mechanical and workability properties and can be reused in the same type of original article.

The main feature of the hose according to the invention is the complete absence of textile residues which allows to obtain an homogeneous material usefully and economically reusable.

According to a variated embodiment, the hose is defined by a first layer 10 constituted by a partially or completely dynamically vulcanized thermoplastic rubber or by an elastomeric polyolefin.

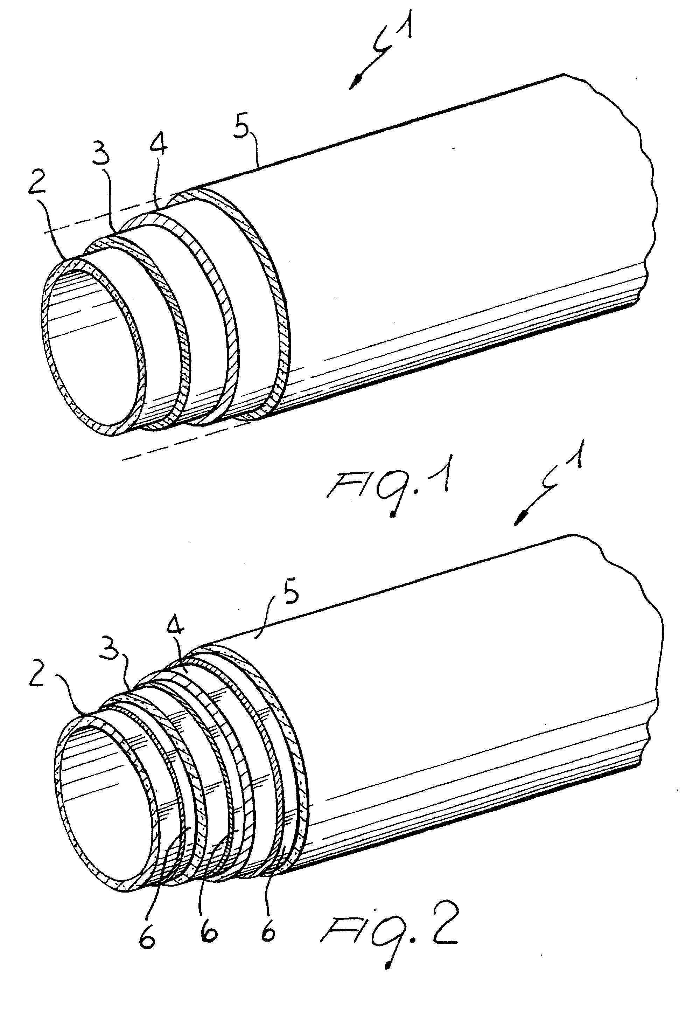

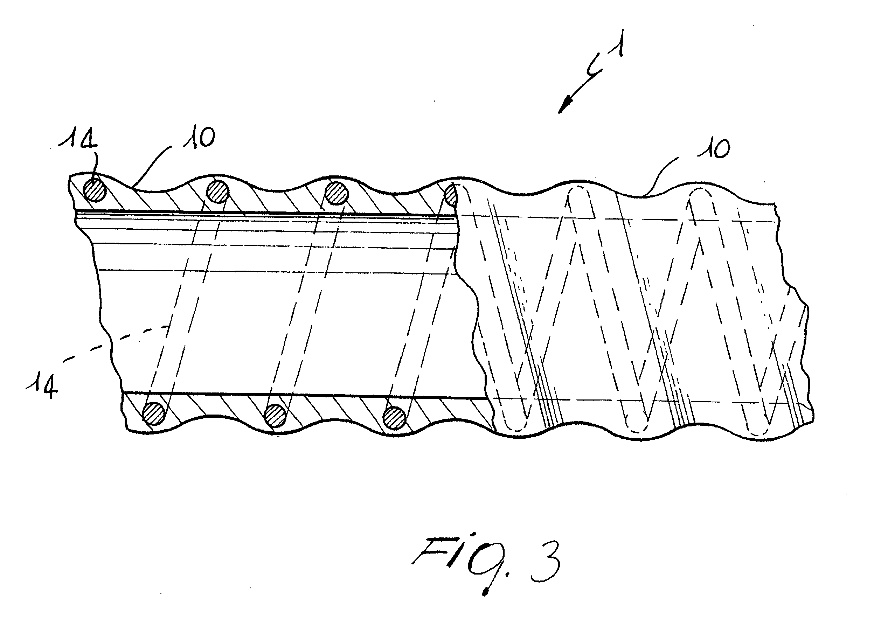

The second reinforcing layer is instead defined by a reinforcing coil 14 embedded in the first layer as shown in FIG. 3.

In particular, coil 14 is constituted by a mainly crystalline thermoplastic polyolefin chosen among PE/PP or their copolymers.

In order to prevent an excessive shrinkage of the material of the coil during the manufacturing of the hose, the coil may be constituted by a partially or completely dynamically vulcanized thermoplastic rubber with a high content of mainly crystalline thermoplastic polyolefin.

It has been seen in practice that the hose according to the invention is particularly advantageous from the point of view of the environment because the materials can be recycled and from the economical point of view because the recycled material can be completely reused with no limitations whatsoever. Furthermore, the hoses according to the invention can float and are therefore easily retrieved if left in the sea, lakes or rivers. The possibility of manufacturing unions with thermoplastic.materials compatible with the materials constituting the hose allows to dispose of the pipings without disassembling and to recycle and reused them completely.

The materials employed, as well as the dimensions, may be any according to the specific needs and the state of the art.

## Claims

1. Recyclable hose (1) comprising a plurality of mutually associated coaxial layers, said layers comprising at least one inner layer (2) having a surface adapted to contact a fluid to be carried, at least one second reinforcing layer (4) and at least one third external layer (5) adapted to protect and lock said at least one second reinforcing layer, wherein said inner layer (2), said second reinforcing layer (4) and said third external layer (5) constituting said hose (1) are constituted by mutually completely compatible and mixable materials,
**characterized in that**
said polymer or said polymer composition constituting said at least one first layer (2) of said hose (1) is a thermoplastic polyolefin,
said at least one third covering layer (5) is constituted by a polymer or polymer composition equal to the polymer or polymer composition of said at least one first layer (2), and
said at least one second reinforcing layer (4) is constituted by a mainly crystalline thermoplastic polyolefin.

2. Hose (1), according to claim 1, **characterized in that** said at least one second reinforcing layer (4) is constituted by textile fibers.

3. Hose (1), according to one or more of the preceding claims, **characterized in that** said textile fibers are applied by plaiting, voluting or parceling on the underlying layers.

4. Hose, (1) according to one or more of the preceding claims, **characterized in that** said at least one second reinforcing layer (4) is constituted by PP fibers.

5. Hose (1), according to one or more of the preceding claims, **characterized in that** it comprises at least one fourth layer (3) arranged between said at least one first layer (2) and said at least one second reinforcing layer (4), said at least one fourth layer (3) being adapted to increase the thickness.

6. Hose (1), according to one or more of the preceding claims, **characterized in that** said thermoplastic polyolefin constituting said at least one first layer (2) of said hose (1) is mainly crystalline.

7. Hose (1), according to one or more of the preceding claims, **characterized in that** said mainly crystalline thermoplastic polyolefin constituting said at least one first layer (2) is chosen among polyethylene and its relative copolymers or among polypropylene and its relative copolymers or its lative mixtures with EPM/EPDM.

8. Hose (1), according to one or more of the preceding claims, **characterized in that** said polymer or said polymer composition constituting said at least one first layer (2) of said hose (1) is constituted by a partially or completely dynamically vulcanized thermoplastic rubber.

9. Hose (1), according to one or more of the preceding claims, **characterized in that** said partially or completely dynamically vulcanized thermoplastic rubber is based on mainly crystalline thermoplastic polyolefins.

10. Hose (1), according to one or more of the preceding claims, **characterized in that** said partially or completely dynamically vulcanized thermoplastic rubber is based on EPDM/EPM type polyolefin elastomers or compatible nitrile rubber.

11. Hose (1), according to one or more of the preceding claims, **characterized in that** said polymer or polymer composition constituting said at least one fourth layer (3) is a partially or completely dynamically vulcanized thermoplastic rubber.

12. Hose (1), according to claim 11, **characterized in that** said partially or completely dynamically vulcanized thermoplastic rubber is based on mainly crystalline thermoplastic polyolefins.

13. Hose (1), according to one or more of the preceding claims, **characterized in that** said thermoplastic rubber constituting said at least one fourth layer (3) is based on EPDM/EPM type polyolefin elastomers or compatible nitrile rubber.

14. Hose (1), according to one or more of the preceding claims, **characterized in that** said fourth layer (3) is constituted by biodegradable thermoplastic polyolefins such as polyethylene and its copolymers containing starch.

15. Hose (1), according to one or more of the preceding claims, **characterized in that** said at least one third covering layer (5) is constituted by a polymer or polymer composition equal to the polymer or polymer composition of said at least one fourth layer (3).

16. Hose (1), according to one or more of the preceding claims, **characterized in that** between at least two layers constituting said hose (1), it comprises a layer constituted by a thermoplastic polyolefin functional with at least one maleic anhydride for improving the adhesion and . compatibility between the layers where it is provided.

17. Hose (1), according to one or more of the preceding claims, **characterized in that** said at least one first layer (2) of said hose (1) is constituted by a mainly crystalline partially or completely dynamically vulcanized thermoplastic rubber.

18. Hose (1), according to one or more of the preceding claims, **characterized in that** said at least one first layer (2) of said hose (1) is constituted by an elastomeric polyolefin.

19. Hose (1), according to one or more of the preceding claims, **characterized in that** said at least one second reinforcing layer (4) comprises a coil embedded in said first layer (2), said coil being constituted by a mainly crystalline thermoplastic polyolefin chosen among PE/PP or their copolymers.

20. Hose (1), according to one or more of the preceding claims, **characterized in that** said coil is constituted by a partially or completely dynamically vulcanized thermoplastic rubber with a high content of mainly crystalline thermoplastic polyolefin.

## Patentansprüche

1. Ein wiederverwertbarer (1) Schlauch bestehendaus einer Vielzahl gegenseitig verbundener koaxialer Schichten, wobei besagte Schichten zumindest eine innere Schicht (2) umfassen, deren Oberfläche geeignet, ist mit einem zu befördernden Fluid in Kontakt zu treten, sowie zumindest eine zweite, verstärkende Schicht (4) und zumindest eine dritte, äußere Schicht (5), die dafür geeignet ist, besagte, zumindest eine, zweite verstärkende Schicht zu schützen und fest zu klemmen, in welcher besagte innere Schicht (2), besagte zweite, verstärkende Schicht (4) und besagte dritte, äußere Schicht (5), besagten Schlauch (1) bilden und aus gegenseitig vollständig verträglichen und vermischbaren Materialien zusammen gesetzt sind, **dadurch gekennzeichnet, dass** besagtes Polymer oder besagte Polymerzusammensetzung zumindest eine erste Schicht (2) des besagten Schlauches (1) aus polyolefinem Thermoplast bilden; besagte, zumindest eine, dritte, umhüllende Schicht (5) durch ein Polymer oder eine Polymerzusammensetzung gebildet wird, die dem Polymer oder der Polymerzusammensetzung von besagter, zumindest einer, ersten Schicht (2) entspricht, und besagte, zumindest eine, zweite verstärkende Schicht (4) aus einem in erster Linie kristallinen polyolefinen Thermoplast gebildet wird.

2. Schlauch (1) nach Anspruch 1, **dadurch gekennzeichnet, dass** besagte, zumindest eine, zweite, verstärkende Schicht (4) aus Textilfasern gebildet wird.

3. Schlauch (1) nach einem oder mehreren der vorhergehenden Ansprüche, **dadurch gekennzeichnet, dass** besagte Textilfasern durch Rundflechten, Spiralflechten oder Abdecken auf den darunter liegenden Schichten aufgebracht werden.

4. Schlauch (1) nach einem oder mehreren der vorhergehenden Ansprüche, **dadurch gekennzeichnet, dass** besagte, zumindest eine, zweite, verstärkende Schicht aus PP-Fasern gebildet wird.

5. Schlauch (1) nach einem oder mehreren der vorhergehenden Ansprüche, **dadurch gekennzeichnet, dass** er zumindest eine vierte Schicht (3) umfasst, die zwischen besagter, zumindest einer, ersten Schicht (2) und besagter, zumindest einer, zweiten, verstärkenden Schicht (4) angeordnet ist, wobei besagte, zumindest eine, vierte Schicht (3) angepasst wird, um die Gesamtdicke zu verstärken.

6. Schlauch (1 nach einem oder mehreren der vorhergehenden Ansprüche, **dadurch gekennzeichnet, dass** besagter, thermoplastischer Polyolefin besagte, zumindest eine, erste Schicht (2) von besagtem Schlauch (1) bildet und in erster Linie kristallin ist.

7. Schlauch (1) nach einem oder mehreren der vorhergehenden Ansprüche, **dadurch gekennzeichnet, dass** besagter, in erster Linie kristalliner thermoplastischer Polyolefin, der besagte, zumindest eine, erste Schicht (2) bildet, aus Polyethylen und seinen verwandten Mischpolymeren oder aus seinen verwandten Mischungen mit EPM/EPDM ausgewählt wird.

8. Schlauch (1) nach einem oder mehreren der vorhergehenden Ansprüche, **dadurch gekennzeichnet, dass** besagter Polymer oder besagte Polymerzusammensetzung, die zumindest eine, erste Schicht (2) von besagtem Schlauch (1) bildet, aus einen teilweise oder vollständig dynamisch vulkanisierten thermoplastischen Kautschuk gebildet wird.

9. Schlauch (1) nach einem oder mehreren der vorhergehenden Ansprüche, **dadurch gekennzeichnet, dass** besagter, teilweise oder vollständig dynamisch vulkanisierter thermoplastischer Kautschuk auf in erster Linie kristallinem, thermoplastischen Polyolefin basiert.

10. Schlauch (1) nach einem oder mehreren der vorhergehenden Ansprüche, **dadurch gekennzeichnet, dass** dieser besagte, teilweise oder vollständig dynamisch vulkanisierte thermoplastische Kautschuk auf EPM/EPDM-artigen polyolefinen Elastomeren oder verträglichem Acrylnitril-Butadien-Kautschuk basiert.

11. Schlauch (1) nach einem oder mehreren der vorhergehenden Ansprüche, **dadurch gekennzeichnet, dass** besagter Polymer oder besagte Polymerzusammensetzung, die besagte, zumindest eine, vierte Schicht (3) bildet, die aus teilweise oder vollständig dynamisch vulkanisiertem thermoplastischen Kautschuk ist.

12. Schlauch (1) nach einem oder mehreren der vorhergehenden Ansprüche, **dadurch gekennzeichnet, dass** besagter teilweise oder vollständig dynamisch vulkanisierter thermoplastischer Kautschuk auf in erster Linie kristallinen, thermoplastischen Polyolefinen basiert.

13. Schlauch (1) nach einem oder mehreren der vorhergehenden Ansprüche, **dadurch gekennzeichnet, dass** besagter, thermoplastischer Kautschuk, der zumindest eine vierte Schicht (3) bildet, auf EPM/EPDM-artigen polyolefinen Elastomeren oder verträglichem Acrylnitril-Butadien-Kautschuk basiert.

14. Schlauch (1) nach einem oder mehreren der vorhergehenden Ansprüche, **dadurch gekennzeichnet, dass** besagte vierte Schicht (3) aus bioabbaubaren thermoplastischen Polyolefinen wie Polyehtylen und seinen Mischpolymeren gebildet wird, die Stärke enthalten.

15. Schlauch (1) nach einem oder mehreren der vorhergehenden Ansprüche, **dadurch gekennzeichnet, dass** besagte, zumindest eine, umhüllende, dritte Schicht (5) durch ein Polymer oder eine Polymerzusammensetzung gebildet wird, die dem Polymer oder der Polymerzusammensetzung von besagter, zumindest einer, vierten Schicht (3) entspricht.

16. Schlauch (1) nach einem oder mehreren der vorhergehenden Ansprüche, **dadurch gekennzeichnet, dass** zwischen mindestens zwei Schichten, welche besagten Schlauch (1) bilden, eine Schicht enthalten ist, die zur Verbesserung der Haftfestigkeit und Verträglichkeit zwischen den Schichten, wo sie aufgebracht wird, aus einer thermoplastischen Polyolefinbeschichtung mit mindestens einem Maleinanhydrit gebildet wird.

17. Schlauch (1) nach einem oder mehreren der vorhergehenden Ansprüche, **dadurch gekennzeichnet, dass** besagte, zumindest eine, erste Schicht (2) von besagtem Schlauch (1) aus in erster Linie kristallinem, teilweise oder vollständig dynamisch vulkanisierten Kautschuck gebildet wird.

18. Schlauch (1) nach einem oder mehreren der vorhergehenden Ansprüche, **dadurch gekennzeichnet, dass** besagte, zumindest eine, erste Schicht (2) von besagtem Schlauch (1) aus einem polyolefinen Elastomer gebildet wird.

19. Schlauch (1) nach einem oder mehreren der vorhergehenden Ansprüche, **dadurch gekennzeichnet, dass** besagte, zumindest eine, verstärkende zweite Schicht (4) eine eingebettete Spulenwicklung umfasst, wobei besagte Spulenwicklung aus einem in erster Linie kristallinen, thermoplastischen Polyolefin gebildet wird, der aus PE/PP oder deren Mischpolymeren ausgewählt wird.

20. Schlauch (1) nach einem oder mehreren der vorhergehenden Ansprüche, **dadurch gekennzeichnet, dass** besagte Spulenwicklung aus einem, teilweise oder vollständig dynamisch vulkanisierten Kautschuck gebildet wird, der einen hohen Anteil von in erster Linie kristallinem, thermoplastischen Polyolefin aufweist.

## Revendications

1. Tuyau recyclable (1) comprenant une pluralité de couches coaxiales réciproquement associées, lesdites couches comprenant au moins une couche interne (2) ayant une surface adaptée en vue de contacter un liquide à transporter, au moins une deuxième couche de renfort (4) ainsi qu'au moins une troisième couche externe (5) adaptée en vue de protéger et d'enclencher ladite au moins une deuxième couche de renfort, où ladite couche interne (2), ladite deuxième couche de renfort (4) et ladite troisième couche externe (5) constituant ledit tuyau (1) se composent de matériels tout à fait compatibles les uns avec les autres et qu'on peut mélanger réciproquement, **caractérisé en ce que** ledit polymère ou ledit composé polymère constituant au moins une première couche (2) dudit tuyau (1) est une polyoléfine thermoplastique , ladite au moins une troisième couche de protection (5) est constituée soit par un polymère soit par un composé polymère de ladite au moins une première couche (2), et ladite au moins une deuxième couche de renfort (4) est constituée par une polyoléfine substantiellement cristalline.

2. Tuyau (1), selon la revendication 1, **caractérisé en ce que** ladite au moins une deuxième couche de renfort (4) se compose de fibres textiles.

3. Tuyau (1), selon l'une ou plusieurs des revendications précédentes, **caractérisé en ce que** lesdites fibres textiles sont appliquées aux couches sous-jacentes au moyen d'une action de nattage, de cintrage en spirale ou de groupement.

4. Tuyau (1), selon l'une ou plusieurs des revendications précédentes, **caractérisé en ce que** ladite au moins une deuxième couche de renfort (4) se compose de fibres PP.

5. Tuyau (1), selon l'une ou plusieurs des revendications précédentes, **caractérisé en ce qu'**il comprend au moins une quatrième couche (3) aménagée entre ladite au moins une première couche (2) et ladite au moins une deuxième couche de renfort (4), ladite au moins une quatrième couche (3) étant adaptée en vue d'augmenter l'épaisseur.

6. Tuyau (1), selon l'une ou plusieurs des revendications précédentes, **caractérisé en ce que** ladite polyoléfine thermoplastique constituant ladite au moins une première couche (2) dudit tuyau (1) est substantiellement cristalline.

7. Tuyau (1), selon l'une ou plusieurs des revendications précédentes, **caractérisé en ce que** ladite polyoléfine thermoplastique substantiellement cristalline constituant ladite au moins une première couche (2) est choisie soit parmi du polyéthylène et les copolymères y afférents soit parmi du polypropylène et les copolymères y afférents ou les mélanges avec EPM/EPDM y afférents.

8. Tuyau (1), selon l'une ou plusieurs des revendications précédentes, **caractérisé en ce que** ledit polymère ou ledit composé polymère constituant ladite au moins une première couche (2) dudit tuyau (1) se compose d'un caoutchouc thermoplastique partiellement ou complètement volcanisé d'une façon dynamique.

9. Tuyau (1), selon l'une ou plusieurs des revendications précédentes,
**caractérisé en ce que** ledit caoutchouc thermoplastique partiellement ou complètement volcanisé d'une façon dynamique se base sur des polyoléfines thermoplastiques substantiellement cristallines.

10. Tuyau (1), selon l'une ou plusieurs des revendications précédentes, **caractérisé en ce que** ledit caoutchouc thermoplastique partiellement ou complètement volcanisé d'une façon dynamique se base soit sur des élastomères polyoléfines du type EPDM/EPM soit sur du caoutchouc nitrile compatible.

11. Tuyau (1), selon l'une ou plusieurs des revendications précédentes, **caractérisé en ce que** ledit polymère ou ledit composé polymère constituant ladite au moins une quatrième couche (3) est un caoutchouc thermoplastique partiellement ou complètement volcanisé d'une façon dynamique.

12. Tuyau, selon la revendication 11, **caractérisé en ce que** ledit caoutchouc thermoplastique partiellement ou complètement volcanisé d'une façon dynamique se base sur des polyoléfines thermoplastiques substantiellement cristallines.

13. Tuyau (1), selon l'une ou plusieurs des revendications précédentes, **caractérisé en ce que** ledit caoutchouc thermoplastique constituant ladite au moins une quatrième couche (3) se base soit sur des élastomères polyoléfines du type EPDM/EPM soit sur du caoutchouc nitrile compatible.

14. Tuyau (1), selon l'une ou plusieurs des revendications précédentes, **caractérisé en ce que** ladite quatrième couche (3) se compose de polyoléfines thermoplastiques biodégradables telles le polyéthylène et ses copolymères contenant de l'amidon.

15. Tuyau (1), selon l'une ou plusieurs des revendications précédentes, **caractérisé en ce que** ladite au moins une troisième couche de protection (5) se compose soit d'un polymère soit d'un composé polymère égal au polymère ou au composé polymère de ladite au moins une quatrième couche (3).

16. Tuyau (1), selon l'une ou plusieurs des revendications précédentes, **caractérisé en ce qu'**entre au moins deux couches constituant ledit tuyau (1), il comprend une couche se composant d'une polyoléfine thermoplastique fonctionnelle avec au moins un anhydride maléique en vue d'améliorer l'adhérence et la compatibilité entre les couches où elle est prévue.

17. Tuyau (1), selon l'une ou plusieurs des revendications précédentes, **caractérisé en ce que** ladite au moins une première couche (2) dudit tuyau (1) se compose d'un caoutchouc thermoplastique substantiellement cristallin partiellement ou complètement volcanisé d'une façon dynamique.

18. Tuyau (1), selon l'une ou plusieurs des revendications précédentes, **caractérisé en ce que** ladite au moins une première couche (2) dudit tuyau (1) se compose d'une polyoléfine d'élastomère.

19. Tuyau, selon l'une ou plusieurs des revendications précédentes, **caractérisé en ce que** ladite au moins une deuxième couche de renfort (4) comprend une bobine enfoncée dans ladite première couche (2), ladite bobine se composant d'une polyoléfine thermoplastique substantiellement cristalline choisie soit parmi des PE/PP soit parmi leurs copolymères.

20. Tuyau (1), selon l'une ou plusieurs des revendications précédentes, **caractérisé en ce que** ladite bobine se compose d'un caoutchouc thermoplastique partiellement ou complètement volcanisé d'une façon dynamique avec un contenu massif de polyoléfine thermoplastique substantiellement cristalline.
